# EUROPEAN PATENT SPECIFICATION

(11) **EP 3 918 793 B1**
(45) Date of publication and mention of the grant of the patent: **23.07.2025**
(21) Application number: 20748861.0
(22) Date of filing: 23.01.2020
(51) Int. Cl.: G06T 19/00, H04N 13/194, H04N 13/279, H04N 13/344, H04N 19/20, G06T 9/00, H04N 19/597, H04N 21/2343, H04N 21/81

(54) **AN APPARATUS AND A METHOD FOR VOLUMETRIC VIDEO**
VORRICHTUNG UND VERFAHRENFÜR VOLUMETRISCHES VIDEO
APPAREIL ET PROCÉDÉ POUR VIDÉO VOLUMÉTRIQUE

(30) Priority: 30.01.2019 FI 20195057
(43) Date of publication of application: 08.12.2021
(73) Proprietor: Nokia Technologies Oy, 02610 Espoo (FI)
(72) Inventor: ROIMELA, Kimmo, 33710 Tampere (FI); KERÄNEN, Jaakko, 00390 Helsinki (FI); MALAMAL VADAKITAL, Vinod Kumar, 33870 Tampere (FI); ILOLA, Lauri, 33200 Tampere (FI)
(74) Representative: Berggren Oy
(86) International application number: PCT/FI2020/050034
(87) International publication number: WO 2020/157376

(56) References cited:
- US-A1- 2017 347 120
- US-A1- 2018 278 956
- CHUNG DEAN HAN (PANASONIC) ET AL: "[PCC] TMC13 new proposal on Combine Frame Coding", no. m44813, 4 October 2018 (2018-10-04), XP030192444, Retrieved from the Internet <URL:http://phenix.int-evry.fr/mpeg/doc_end_user/documents/124_Macao/wg11/m44813-v1-m44813.zip m44813.docx> [retrieved on 20181004]
- MAMMOU KHALED ET AL: "INTERNATIONAL ORGANISATION FOR STANDARDISATION ORGANISATION INTERNATIONALE DE NORMALISATION ISO/IEC JTC1/SC29/WG11 CODING OF MOVING PICTURES AND AUDIO Marrakech, MA Source 3DG Status Output Document Title G-PCC codec description v2", ISO/IEC JTC1/SC29/WG11 N18189, 1 January 2019 (2019-01-01), XP055794856, Retrieved from the Internet <URL:https://mpeg.chiariglione.org/sites/default/files/files/standards/parts/docs/w18189.zip>
- QING YUAN ET AL: "Space-Time Co-Segmentation of Articulated Point Cloud Sequences", COMPUTER GRAPHICS FORUM : JOURNAL OF THE EUROPEAN ASSOCIATION FOR COMPUTER GRAPHICS, WILEY-BLACKWELL, OXFORD, vol. 35, no. 2, 27 May 2016 (2016-05-27), pages 419 - 429, XP071488396, ISSN: 0167-7055, DOI: 10.1111/CGF.12843
- HAN, CHUNG DEAN ET AL.: "G-PCC] CE13.5 Report on combine frame coding in TMC13. MPEG2018/m46101", MPEG DOCUMENT MANAGEMENT SYSTEM. 125TH MPEG MEETING, MARRAKECH: ISO/IEC JTC1/SC29/WG11, 9 January 2019 (2019-01-09), pages 1 - 7, XP030214599, Retrieved from the Internet <URL:http://wg11.sc29.org> [retrieved on 20200401]
- HAN, CHUNG DEAN ET AL.: "PCC] TMC13 new proposal on Combine Frame Coding. MPEG2018/m44813", MPEG DOCUMENT MANAGEMENT SYSTEM. 124TH MPEG MEETING, MACAO: ISO/IEC JTC1/SC29/WG11, 4 October 2018 (2018-10-04), pages 1 - 6, XP030192444, Retrieved from the Internet <URL:http://wg11.sc29.org> [retrieved on 20200401]
- LASSERRE , SEBASTIEN: "Point Cloud Compression Core Experiment 13.5 on inter-prediction on geometry coding in TMC13. MPEG2018/ w17779", MPEG DOCUMENT MANAGEMENT SYSTEM. 123RD MPEG MEETING, LJUBLJANA: ISO/IEC JTC1/SC29/WG11, 16 August 2018 (2018-08-16), pages 1 - 4, XP030190650, Retrieved from the Internet <URL:http://wg11.sc29.org> [retrieved on 20200401]
- JANG, EUEE S. ET AL.: "Description of PCC Core Experiment 2.19 on tiles and slices. MPEG2018/N18012", MPEG DOCUMENT MANAGEMENT SYSTEM. 124TH MPEG MEETING, MACAO: ISO/IEC JTC1/SC29/WG11, 20 November 2018 (2018-11-20), pages 1 - 11, XP030195474, Retrieved from the Internet <URL:http://wg11.sc29.org> [retrieved on 20190904]
- LIN, XAO ET AL.: "Temporally Coherent 3D Point Cloud Video Segmentation in Generic Scenes", IEEE TRANS. ON IMAGE PROCESSING, vol. 27, no. 6, June 2018 (2018-06-01), pages 1 - 13, XP011682328, Retrieved from the Internet <URL:https://ieeexplore.ieee.org/document/8306148> [retrieved on 20190820]
- NGUYEN, ANH ET AL.: "3D Point Cloud Segmentation: A survey", CONF. ON ROBOTICS, AUTOMATION AND MECHATRONICS, 12 November 2013 (2013-11-12), pages 1 - 6, XP032576054, Retrieved from the Internet <URL:https://ieeexplore.ieee.org/document/6758588> [retrieved on 20190902]

## Description

### TECHNICAL FIELD

The present invention relates to an apparatus, a method and a computer program for volumetric video coding and decoding.

### BACKGROUND

Volumetric video data represents a three-dimensional scene or object and can be used as input for virtual reality (VR), augmented reality (AR) and mixed reality (MR) applications. Such data describes the geometry, e.g. shape, size, position in three-dimensional (3D) space, and respective attributes, e.g. colour, opacity, reflectance and any possible temporal changes of the geometry and attributes at given time instances. Volumetric video is either generated from 3D models through computer-generated imagery (CGI), or captured from real-world scenes using a variety of capture solutions, e.g. multi-camera, laser scan, combination of video and dedicated depth sensors, and more. Also, a combination of CGI and real-world data is possible.

A volumetric video compression pipeline used for generating 3D content for real-time viewing comprises a plurality of processing steps, typically including at least input conversion for converting the input 3D scene into an internal representation, such as a point cloud, representing the spatial 3D samples of the input scene, view optimizing for creating a segmentation of the scene into segments optimized for the specified viewing conditions, pre-rendering of the segments, producing an optimal 2D layout of the rendered segments and packing the pre-rendered segments into video frames. Finally, the video frames are compressed into the final compressed data representation. Non-patent literature CHUNG DEAN HAN (PANASONIC) ET AL: "[PCC] TMC13 new proposal on Combine Frame Coding", 124. MPEG MEETING; 20181008 - 20181012; MACAO; (MOTION PICTURE EXPERT GROUP OR ISO/IEC JTC1/ SC29/WG11), no. m44813 4 October 2018 (2018-10-04), Retrieved from the Internet:URL:http://phenix.int-evry.fr/mpeg/doc_end_user/documents/124_Macao/wg11/m44813-v1-m44813.zip m44813.docx discloses a technique of combine frame coding in point cloud compression G-PCC (Geometry based Point Cloud Compression).

However, all these stages handle the video data as per-frame basis, which may cause problems relating to temporal coherency in volumetric video compression. As the segmentation of the 3D scene depends on the content of the scene, for dynamic content, the segmentation can change on a per-frame basis. Since video compression in turn relies on compressing temporal redundancy, a rapidly changing tile atlas is poorly suited for video compression.

### SUMMARY

Now, an improved method and technical equipment implementing the method has been invented, by which the above problems are alleviated. Various aspects include a method and an apparatus, which are characterized by what is stated in the independent claims. Various details of the embodiments are disclosed in the dependent claims and in the corresponding images and description.

According to a first aspect, there is provided a method comprising obtaining a plurality of frames of a three-dimensional (3D) video stream, wherein each of said frames comprises a point cloud representation of spatial samples of a 3D input scene; combining the point cloud representations of said frames into an accumulated point cloud model; and providing, in response to the number of said frames combined in said accumulated point cloud model reaching a predetermined threshold value, said accumulated point cloud model into a segmentation process for segmenting the 3D scene, said segmenting comprising creating view-tiles having a coverage and a resolution suitable for representing the 3D input scene at minimal quality degradation; and creating metadata relating to the accumulated point cloud model, said metadata comprising a position and a size of each view-tile and view-projection parameters of each view-tile.

According to an embodiment, the predetermined threshold value corresponds to a size of Group-of-Pictures (GoP).

According to an embodiment, the predetermined threshold value is 32.

According to an embodiment, the method further comprises checking, prior to combining any frame into said accumulated point cloud model, content of the frame; and ignoring frames providing no relevant data for the view optimization process.

According to an embodiment, the method further comprises creating metadata relating to the accumulated point cloud model, said metadata comprising position and size of each tile and view-projection parameters of each tile.

An apparatus according to a second aspect comprises means for obtaining a plurality of frames of a three-dimensional (3D) video stream, wherein each of said frames comprises a point cloud representation of spatial samples of a 3D input scene; means for combining the point cloud representations of said frames into an accumulated point cloud model; and means for providing, responsive to the number of said frames combined in said accumulated point cloud model reaching a predetermined threshold value, said accumulated point cloud model into a segmentation process for segmenting the 3D scene, cene, said segmenting comprising creating view-tiles having a coverage and a resolution suitable for representing the 3D input scene at minimal quality degradation; and creating metadata relating to the accumulated point cloud model, said metadata comprising a position and a size of each view-tile and view-projection parameters of each view-tile

Apparatuses according to further aspects comprise at least one processor and at least one memory, said at least one memory stored with code thereon, when executed by said at least one processor, causes the apparatus to perform the above methods.

Computer readable storage media according to further aspects comprise code for use by an apparatus, which when executed by a processor, causes the apparatus to perform the above methods.

Further aspects relate at least to an apparatus and computer readable storage medium with computer program code comprising means for performing the above methods and embodiments related thereto.

### BRIEF DESCRIPTION OF THE DRAWINGS

For a more complete understanding of the example embodiments, reference is now made to the following descriptions taken in connection with the accompanying drawings in which:
Fig. 1 shows a system for capturing, encoding, decoding, reconstructing and viewing a three-dimensional scheme;
Figs. 2a and 2b show a capture device and a viewing device;
Figs. 3a and 3b show an encoder and decoder for encoding and decoding texture pictures, geometry pictures and/or auxiliary pictures;
Figs. 4a, 4b, 4c and 4d show a setup for forming a stereo image of a scene to a user;
Figs. 5a illustrates projection of source volumes in a scene and parts of an object to projection surfaces, as well as determining depth information;
Fig. 5b shows an example of projecting an object using a cube map projection format;
Fig. 6 shows an example of volumetric video compression pipeline;
Fig. 7 shows a flow chart for temporal accumulation of scene geometry according to an embodiment;
Fig. 8 shows a block chart of temporal accumulation steps according to an embodiment; and
Fig. 9 shows an example of the effects of the temporally accumulated point cloud model according to an embodiment.

### DETAILED DESCRIPTON OF SOME EXAMPLE EMBODIMENTS

In the following, several embodiments of the invention will be described in the context of point cloud, voxel or mesh scene models for three-dimensional volumetric video and pixel and picture based two-dimensional video coding. It is to be noted, however, that the invention is not limited to specific scene models or specific coding technologies. In fact, the different embodiments have applications in any environment where coding of volumetric scene data is required.

"Voxel" of a three-dimensional world corresponds to a pixel of a two-dimensional world. Voxels exist in a three-dimensional grid layout. An octree is a tree data structure used to partition a three-dimensional space. Octrees are the three-dimensional analog of quadtrees. A sparse voxel octree (SVO) describes a volume of a space containing a set of solid voxels of varying sizes. Empty areas within the volume are absent from the tree, which is why it is called "sparse".

A three-dimensional volumetric representation of a scene is determined as a plurality of voxels on the basis of input streams of at least one multicamera device. Thus, at least one but preferably a plurality (i.e. 2, 3, 4, 5 or more) of multicamera devices are used to capture 3D video representation of a scene. The multicamera devices are distributed in different locations in respect to the scene, and therefore each multicamera device captures a different 3D video representation of the scene. The 3D video representations captured by each multicamera device may be used as input streams for creating a 3D volumetric representation of the scene, said 3D volumetric representation comprising a plurality of voxels. Voxels may be formed from the captured 3D points e.g. by merging the 3D points into voxels comprising a plurality of 3D points such that for a selected 3D point, all neighbouring 3D points within a predefined threshold from the selected 3D point are merged into a voxel without exceeding a maximum number of 3D points in a voxel.

Voxels may also be formed through the construction of the sparse voxel octree. Each leaf of such a tree represents a solid voxel in world space; the root node of the tree represents the bounds of the world. The sparse voxel octree construction may have the following steps: 1) map each input depth map to a world space point cloud, where each pixel of the depth map is mapped to one or more 3D points; 2) determine voxel attributes such as colour and surface normal vector by examining the neighbourhood of the source pixel(s) in the camera images and the depth map; 3) determine the size of the voxel based on the depth value from the depth map and the resolution of the depth map; 4) determine the SVO level for the solid voxel as a function of its size relative to the world bounds; 5) determine the voxel coordinates on that level relative to the world bounds; 6) create new and/or traversing existing SVO nodes until arriving at the determined voxel coordinates; 7) insert the solid voxel as a leaf of the tree, possibly replacing or merging attributes from a previously existing voxel at those coordinates. Nevertheless, the size of voxel within the 3D volumetric representation of the scene may differ from each other. The voxels of the 3D volumetric representation thus represent the spatial locations within the scene.

A volumetric video frame is a complete sparse voxel octree that models the world at a specific point in time in a video sequence. Voxel attributes contain information like colour, opacity, surface normal vectors, and surface material properties. These are referenced in the sparse voxel octrees (e.g. colour of a solid voxel), but can also be stored separately.

Point clouds are commonly used data structures for storing volumetric content. Compared to point clouds, sparse voxel octrees describe a recursive subdivision of a finite volume with solid voxels of varying sizes, while point clouds describe an unorganized set of separate points limited only by the precision of the used coordinate values.

When encoding a volumetric video, each frame may produce several hundred megabytes or several gigabytes of voxel data which needs to be converted to a format that can be streamed to the viewer, and rendered in real-time. The amount of data depends on the world complexity and volume. The larger impact comes in a multi-device recording setup with a number of separate locations where the cameras are recording. Such a setup produces more information than a camera at a single location.

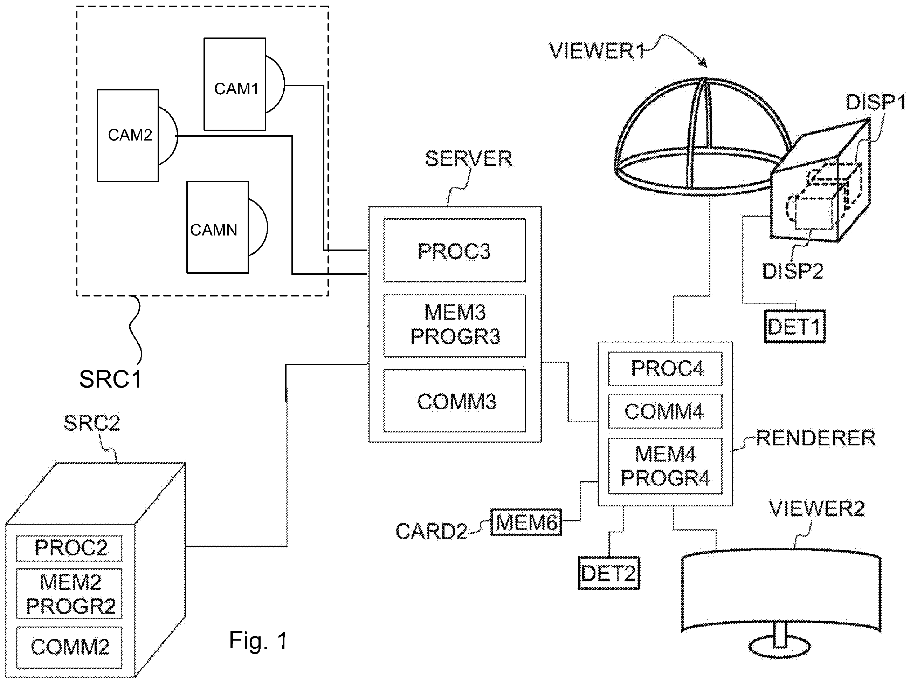

Fig. 1 shows a system for capturing, encoding, decoding, reconstructing and viewing a three-dimensional scheme, that is, for 3D video and 3D audio digital creation and playback. The task of the system is that of capturing sufficient visual and auditory information from a specific scene to be able to create a scene model such that a convincing reproduction of the experience, or presence, of being in that location can be achieved by one or more viewers physically located in different locations and optionally at a time later in the future. Such reproduction requires more information that can be captured by a single camera or microphone, in order that a viewer can determine the distance and location of objects within the scene using their eyes and their ears. To create a pair of images with disparity, two camera sources are used. In a similar manner, for the human auditory system to be able to sense the direction of sound, at least two microphones are used (the commonly known stereo sound is created by recording two audio channels). The human auditory system can detect the cues, e.g. in timing difference of the audio signals to detect the direction of sound.

The system of Fig. 1 may consist of three main parts: image sources, a server and a rendering device. A video source SRC1 may comprise multiple cameras CAM1, CAM2, ..., CAMN with overlapping field of view so that regions of the view around the video capture device is captured from at least two cameras. The video source SRC1 may comprise multiple microphones to capture the timing and phase differences of audio originating from different directions. The video source SRC1 may comprise a high-resolution orientation sensor so that the orientation (direction of view) of the plurality of cameras CAM1, CAM2, ..., CAMN can be detected and recorded. The cameras or the computers may also comprise or be functionally connected to means for forming distance information corresponding to the captured images, for example so that the pixels have corresponding depth data. Such depth data may be formed by scanning the depth or it may be computed from the different images captured by the cameras. The video source SRC1 comprises or is functionally connected to, or each of the plurality of cameras CAM1, CAM2, ..., CAMN comprises or is functionally connected to a computer processor and memory, the memory comprising computer program code for controlling the source and/or the plurality of cameras. The image stream captured by the video source, i.e. the plurality of the cameras, may be stored on a memory device for use in another device, e.g. a viewer, and/or transmitted to a server using a communication interface. It needs to be understood that although a video source comprising three cameras is described here as part of the system, another amount of camera devices may be used instead as part of the system.

Alternatively or in addition to the source device SRC1 creating information for forming a scene model, one or more sources SRC2 of synthetic imagery may be present in the system, comprising a scene model. Such sources may be used to create and transmit the scene model and its development over time, e.g. instantaneous states of the model. The model can be created or provided by the source SRC1 and/or SRC2, or by the server SERVER. Such sources may also use the model of the scene to compute various video bitstreams for transmission.

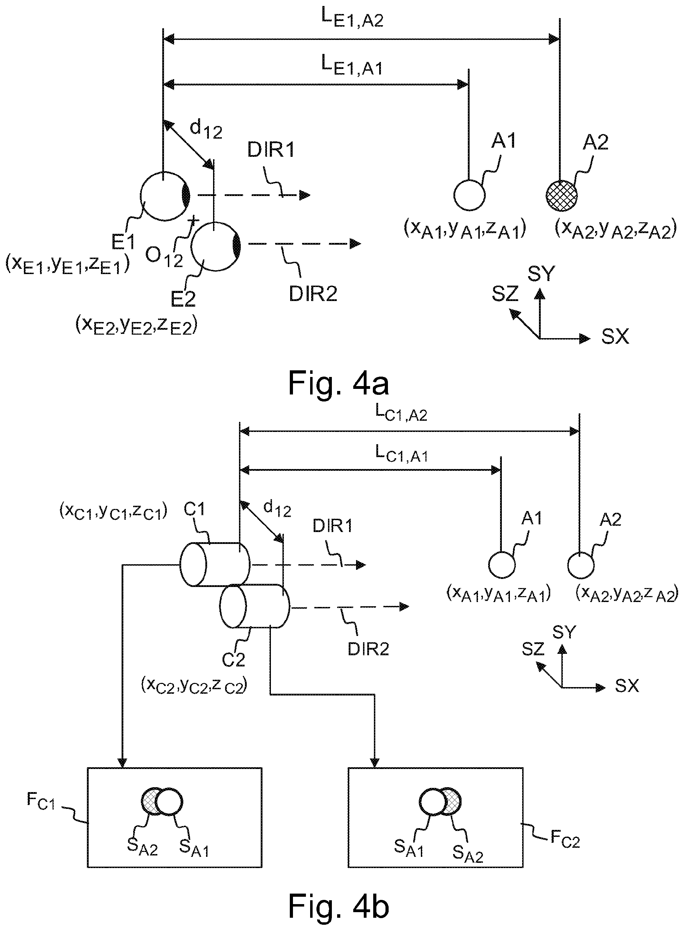

One or more two-dimensional video bitstreams may be computed at the server SERVER or a device RENDERER used for rendering, or another device at the receiving end. When such computed video streams are used for viewing, the viewer may see a three-dimensional virtual world as described in the context of Figs 4a-4d. The devices SRC1 and SRC2 may comprise or be functionally connected to one or more computer processors (PROC2 shown) and memory (MEM2 shown), the memory comprising computer program (PROGR2 shown) code for controlling the source device SRC1/SRC2. The image stream captured by the device and the scene model may be stored on a memory device for use in another device, e.g. a viewer, or transmitted to a server or the viewer using a communication interface COMM2. There may be a storage, processing and data stream serving network in addition to the capture device SRC1. For example, there may be a server SERVER or a plurality of servers storing the output from the capture device SRC1 or device SRC2 and/or to form a scene model from the data from devices SRC1, SRC2. The device SERVER comprises or is functionally connected to a computer processor PROC3 and memory MEM3, the memory comprising computer program PROGR3 code for controlling the server. The device SERVER may be connected by a wired or wireless network connection, or both, to sources SRC1 and/or SRC2, as well as the viewer devices VIEWER1 and VIEWER2 over the communication interface COMM3.

The creation of a three-dimensional scene model may take place at the server SERVER or another device by using the images captured by the devices SRC1. The scene model may be a model created from captured image data (a real-world model), or a synthetic model such as on device SRC2, or a combination of such. As described later, the scene model may be encoded to reduce its size and transmitted to a decoder, for example viewer devices.

For viewing the captured or created video content, there may be one or more viewer devices VIEWER1 and VIEWER2. These devices may have a rendering module and a display module, or these functionalities may be combined in a single device. The devices may comprise or be functionally connected to a computer processor PROC4 and memory MEM4, the memory comprising computer program PROG4 code for controlling the viewing devices. The viewer (playback) devices may consist of a data stream receiver for receiving a video data stream and for decoding the video data stream. The video data stream may be received from the server SERVER or from some other entity, such as a proxy server, an edge server of a content delivery network, or a file available locally in the viewer device. The data stream may be received over a network connection through communications interface COMM4, or from a memory device MEM6 like a memory card CARD2. The viewer devices may have a graphics processing unit for processing of the data to a suitable format for viewing. The viewer VIEWER1 may comprise a high-resolution stereo-image head-mounted display for viewing the rendered stereo video sequence. The head-mounted display may have an orientation sensor DET1 and stereo audio headphones. The viewer VIEWER2 may comprise a display (either two-dimensional or a display enabled with 3D technology for displaying stereo video), and the rendering device may have an orientation detector DET2 connected to it. Alternatively, the viewer VIEWER2 may comprise a 2D display, since the volumetric video rendering can be done in 2D by rendering the viewpoint from a single eye instead of a stereo eye pair.

It needs to be understood that Fig. 1 depicts one SRC1 device and one SRC2 device, but generally the system may comprise more than one SRC1 device and/or SRC2 device.

Any of the devices (SRC1, SRC2, SERVER, RENDERER, VIEWER1, VIEWER2) may be a computer or a portable computing device, or be connected to such or configured to be connected to such. Moreover, even if the devices (SRC1, SRC2, SERVER, RENDERER, VIEWER1, VIEWER2) are depicted as a single device in Fig. 1, they may comprise multiple parts or may be comprised of multiple connected devices. For example, it needs to be understood that SERVER may comprise several devices, some of which may be used for editing the content produced by SRC1 and/or SRC2 devices, some others for compressing the edited content, and a third set of devices may be used for transmitting the compressed content. Such devices may have computer program code for carrying out methods according to various examples described in this text.

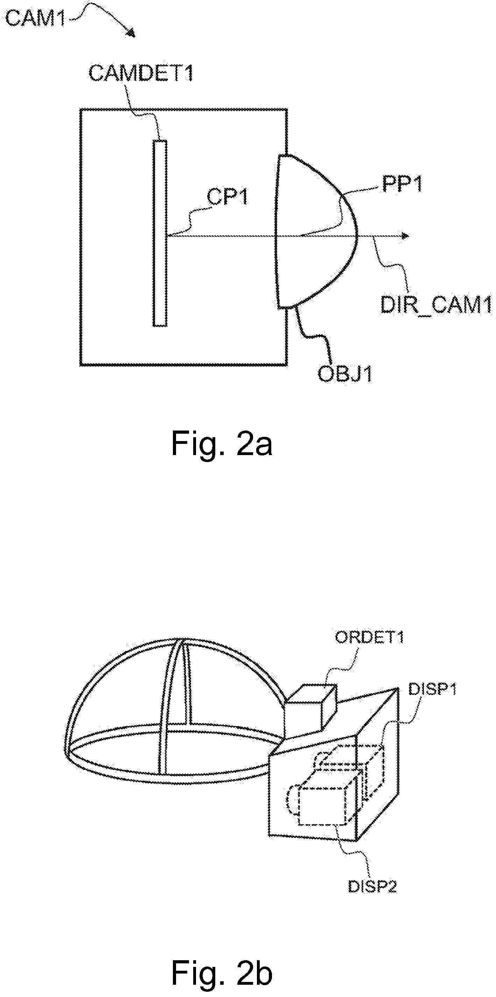

Figs. 2a and 2b show a capture device and a viewing device, respectively. Fig. 2a illustrates a camera CAM1. The camera has a camera detector CAMDET1, comprising a plurality of sensor elements for sensing intensity of the light hitting the sensor element. The camera has a lens OBJ1 (or a lens arrangement of a plurality of lenses), the lens being positioned so that the light hitting the sensor elements travels through the lens to the sensor elements. The camera detector CAMDET1 has a nominal centre point CP1 that is a middle point of the plurality of sensor elements, for example for a rectangular sensor the crossing point of diagonals of the rectangular sensor. The lens has a nominal centre point PP1, as well, lying for example on the axis of symmetry of the lens. The direction of orientation of the camera is defined by the line passing through the centre point CP1 of the camera sensor and the centre point PP1 of the lens. The direction of the camera is a vector along this line pointing in the direction from the camera sensor to the lens. The optical axis of the camera is understood to be this line CP1-PP1. However, the optical path from the lens to the camera detector need not always be a straight line but there may be mirrors and/or some other elements which may affect the optical path between the lens and the camera detector.

Fig. 2b shows a head-mounted display (HMD) for stereo viewing. The head-mounted display comprises two screen sections or two screens DISP1 and DISP2 for displaying the left and right eye images. The displays are close to the eyes, and therefore lenses are used to make the images easily viewable and for spreading the images to cover as much as possible of the eyes' field of view. When the device will be used by a user, the user may put the device on her/his head so that it will be attached to the head of the user so that it stays in place even when the user turns his head. The device may have an orientation detecting module ORDET1 for determining the head movements and direction of the head. The head-mounted display gives a three-dimensional (3D) perception of the recorded/streamed content to a user.

The system described above may function as follows. Time-synchronized video and orientation data is first recorded with the capture devices. This can consist of multiple concurrent video streams as described above. One or more time-synchronized audio streams may also be recorded with the capture devices. The different capture devices may form image and geometry information of the scene from different directions. For example, there may be three, four, five, six or more cameras capturing the scene from different sides, like front, back, left and right, and/or at directions between these, as well as from the top or bottom, or any combination of these. The cameras may be at different distances, for example some of the cameras may capture the whole scene and some of the cameras may be capturing one or more objects in the scene. In an arrangement used for capturing volumetric video data, several cameras may be directed towards an object, looking onto the object from different directions, where the object is e.g. in the middle of the cameras. In this manner, the texture and geometry of the scene and the objects within the scene may be captured adequately. As mentioned earlier, the cameras or the system may comprise means for determining geometry information, e.g. depth data, related to the captured video streams. From these concurrent video and audio streams, a computer model of a scene may be created. Alternatively or additionally, a synthetic computer model of a virtual scene may be used. The models (at successive time instances) are then transmitted immediately or later to the storage and processing network for processing and conversion into a format suitable for subsequent delivery to playback devices. The conversion may involve processing and coding to improve the quality and/or reduce the quantity of the scene model data while preserving the quality at a desired level. Each playback device receives a stream of the data (either computed video data or scene model data) from the network, and renders it into a viewing reproduction of the original location which can be experienced by a user. The reproduction may be two-dimensional or three-dimensional (stereo image pairs).

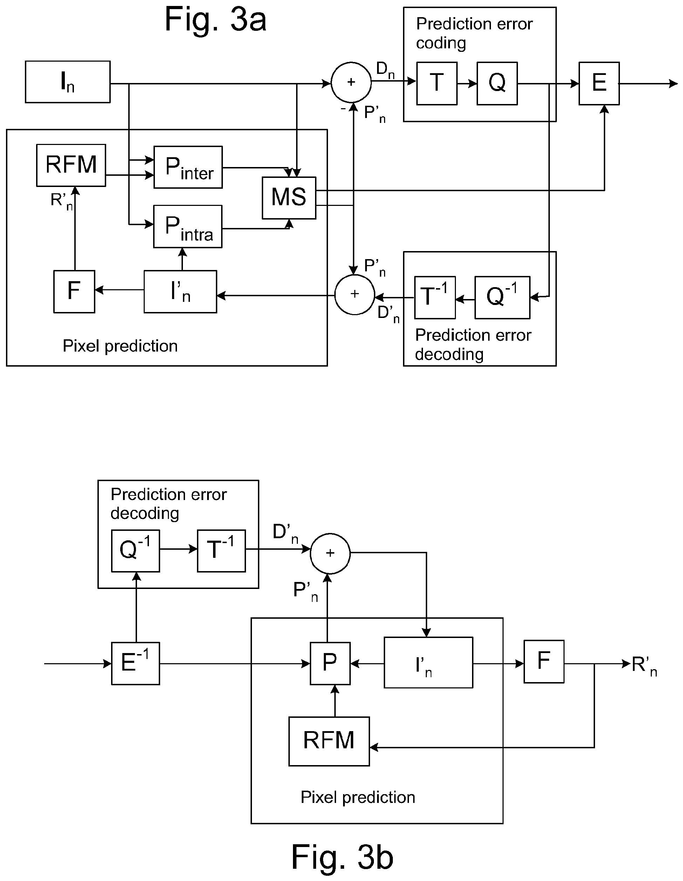

Figs. 3a and 3b show an encoder and decoder for encoding and decoding texture pictures, geometry pictures and/or auxiliary pictures. A video codec consists of an encoder that transforms an input video into a compressed representation suited for storage/transmission and a decoder that can uncompress the compressed video representation back into a viewable form. Typically, the encoder discards and/or loses some information in the original video sequence in order to represent the video in a more compact form (that is, at lower bitrate). An example of an encoding process is illustrated in Figure 3a. Figure 3a illustrates an image to be encoded (Iⁿ); a predicted representation of an image block (P'ⁿ); a prediction error signal (Dⁿ); a reconstructed prediction error signal (D'ⁿ); a preliminary reconstructed image (I'ⁿ); a final reconstructed image (R'ⁿ); a transform (T) and inverse transform (T⁻¹); a quantization (Q) and inverse quantization (Q⁻¹); entropy encoding (E); a reference frame memory (RFM); inter prediction (Pᵢₙₜₑᵣ); intra prediction (Pᵢₙₜᵣₐ); mode selection (MS) and filtering (F).

An example of a decoding process is illustrated in Figure 3b. Figure 3b illustrates a predicted representation of an image block (P'ⁿ); a reconstructed prediction error signal (D'ⁿ); a preliminary reconstructed image (I'ⁿ); a final reconstructed image (R'ⁿ); an inverse transform (T⁻¹); an inverse quantization (Q⁻¹); an entropy decoding (E⁻¹); a reference frame memory (RFM); a prediction (either inter or intra) (P); and filtering (F).

Many hybrid video encoders encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate). Video codecs may also provide a transform skip mode, which the encoders may choose to use. In the transform skip mode, the prediction error is coded in a sample domain, for example by deriving a sample-wise difference value relative to certain adjacent samples and coding the sample-wise difference value with an entropy coder.

Many video encoders partition a picture into blocks along a block grid. For example, in the High Efficiency Video Coding (HEVC) standard, the following partitioning and definitions are used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples. A CU with the maximum allowed size may be named as LCU (largest coding unit) or coding tree unit (CTU) and the video picture is divided into non-overlapping LCUs.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

Entropy coding/decoding may be performed in many ways. For example, context-based coding/decoding may be applied, where in both the encoder and the decoder modify the context state of a coding parameter based on previously coded/decoded coding parameters. Context-based coding may for example be context adaptive binary arithmetic coding (CABAC) or context-based variable length coding (CAVLC) or any similar entropy coding. Entropy coding/decoding may alternatively or additionally be performed using a variable length coding scheme, such as Huffman coding/decoding or Exp-Golomb coding/decoding. Decoding of coding parameters from an entropy-coded bitstream or codewords may be referred to as parsing.

Available media file format standards include ISO base media file format (ISO/IEC 14496-12, which may be abbreviated ISOBMFF). The file format for NAL unit structured video (ISO/IEC 14496-15) and the High Efficiency Image File Format (ISO/IEC 23008-12, which may be abbreviated HEIF) both derive from the ISOBMFF.

Out-of-band transmission, signaling or storage can be used for tolerance against transmission errors as well as for other purposes, such as ease of access or session negotiation. For example, a sample entry of a track in a file conforming to the ISO Base Media File Format may comprise parameter sets, while the coded data in the bitstream is stored elsewhere in the file or in another file. The phrase along the bitstream (e.g. indicating along the bitstream) or along a coded unit of a bitstream (e.g. indicating along a coded tile) may be used in claims and described embodiments to refer to out-of-band transmission, signaling, or storage in a manner that the out-of-band data is associated with the bitstream or the coded unit, respectively. The phrase decoding along the bitstream or along a coded unit of a bitstream or alike may refer to decoding the referred out-of-band data (which may be obtained from out-of-band transmission, signaling, or storage) that is associated with the bitstream or the coded unit, respectively. For example, the phrase along the bitstream may be used when the bitstream is contained in a file, such as a file conforming to the ISO Base Media File Format, and certain file metadata is stored in the file in a manner that associates the metadata to the bitstream, such as boxes in the sample entry for a track containing the bitstream, a sample group for the track containing the bitstream, or a timed metadata track associated with the track containing the bitstream.

Some concepts, structures, and specifications of ISOBMFF are described below as an example of a container file format, based on which the embodiments may be implemented. The aspects of the invention are not limited to ISOBMFF, but rather the description is given for one possible basis on top of which the invention may be partly or fully realized.

A basic building block in the ISO base media file format is called a box. Each box has a header and a payload. The box header indicates the type of the box and the size of the box in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISO base media file format may be considered to specify a hierarchical structure of boxes.

According to the ISO family of file formats, a file includes media data and metadata that are encapsulated into boxes. Each box is identified by a four character code (4CC) and starts with a header which informs about the type and size of the box.

In files conforming to the ISO base media file format, the media data may be provided in a media data 'mdat' box and the movie 'moov' box may be used to enclose the metadata. In some cases, for a file to be operable, both of the 'mdat' and 'moov' boxes may be required to be present. The movie 'moov' box may include one or more tracks, and each track may reside in one corresponding track 'trak' box. A track may be one of the many types, including a media track that refers to samples formatted according to a media compression format (and its encapsulation to the ISO base media file format).

In HEIF, still images are stored as items. All image items are independently coded and do not depend on any other item in their decoding. Any number of image items can be included in the same file.

The Matroska file format is capable of (but not limited to) storing any of video, audio, picture, or subtitle tracks in one file. Matroska may be used as a basis format for derived file formats, such as WebM. Matroska uses Extensible Binary Meta Language (EBML) as basis. EBML specifies a binary and octet (byte) aligned format inspired by the principle of XML. EBML itself is a generalized description of the technique of binary markup. A Matroska file consists of Elements that make up an EBML "document." Elements incorporate an Element ID, a descriptor for the size of the element, and the binary data itself. Elements can be nested. A Segment Element of Matroska is a container for other top-level (level 1) elements. A Matroska file may comprise (but is not limited to be composed of) one Segment. Multimedia data in Matroska files is organized in Clusters (or Cluster Elements), each containing typically a few seconds of multimedia data. A Cluster comprises BlockGroup elements, which in turn comprise Block Elements. A Cues Element comprises metadata which may assist in random access or seeking and may include file pointers or respective timestamps for seek points.

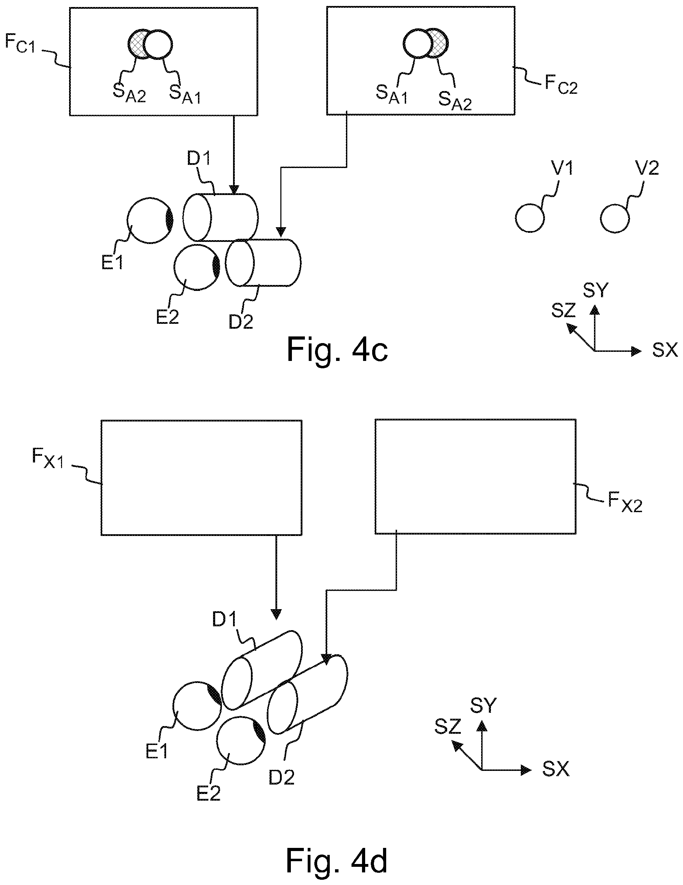

Figs. 4a, 4b, 4c and 4d show a setup for forming a stereo image of a scene to a user, for example a video frame of a 3D video. In Fig. 4a, a situation is shown where a human being is viewing two spheres A1 and A2 using both eyes E1 and E2. The sphere A1 is closer to the viewer than the sphere A2, the respective distances to the first eye E1 being L_{E1,A1} and L_{E1,A2}. The different objects reside in space at their respective (x,y,z) coordinates, defined by the coordinate system SZ, SY and SZ. The distance d₁₂ between the eyes of a human being may be approximately 62-64 mm on average, and varying from person to person between 55 and 74 mm. This distance is referred to as the parallax, on which stereoscopic view of the human vision is based on. The viewing directions (optical axes) DIR1 and DIR2 are typically essentially parallel, possibly having a small deviation from being parallel, and define the field of view for the eyes. The head of the user has an orientation (head orientation) in relation to the surroundings, most easily defined by the common direction of the eyes when the eyes are looking straight ahead. That is, the head orientation tells the yaw, pitch and roll of the head in respect of a coordinate system of the scene where the user is.

When the viewer's body (thorax) is not moving, the viewer's head orientation is restricted by the normal anatomical ranges of movement of the cervical spine.

In the setup of Fig. 4a, the spheres A1 and A2 are in the field of view of both eyes. The centre-point O₁₂ between the eyes and the spheres are on the same line. That is, from the centre-point, the sphere A2 is behind the sphere A1. However, each eye sees part of sphere A2 from behind A1, because the spheres are not on the same line of view from either of the eyes.

In Fig. 4b, there is a setup shown, where the eyes have been replaced by cameras C1 and C2, positioned at the location where the eyes were in Fig. 4a. The distances and directions of the setup are otherwise the same. Naturally, the purpose of the setup of Fig. 4b is to be able to take a stereo image of the spheres A1 and A2. The two images resulting from image capture are F_{C1} and F_{C2}. The "left eye" image F_{C1} shows the image S_{A2} of the sphere A2 partly visible on the left side of the image S_{A1} of the sphere A1. The "right eye" image F_{C2} shows the image S_{A2} of the sphere A2 partly visible on the right side of the image S_{A1} of the sphere A1. This difference between the right and left images is called disparity, and this disparity, being the basic mechanism with which the HVS determines depth information and creates a 3D view of the scene, can be used to create an illusion of a 3D image.

In this setup of Fig. 4b, where the inter-eye distances correspond to those of the eyes in Fig. 4a, the camera pair C1 and C2 has a natural parallax, that is, it has the property of creating natural disparity in the two images of the cameras. Natural disparity may be understood to be created even though the distance between the two cameras forming the stereo camera pair is somewhat smaller or larger than the normal distance (parallax) between the human eyes, e.g. essentially between 40 mm and 100 mm or even 30 mm and 120 mm.

It needs to be understood here that the images F_{C1} and F_{C2} may be captured by cameras C1 and C2, where the cameras C1 and C2 may be real-world cameras or they may be virtual cameras. In the case of virtual cameras, the images F_{C1} and F_{C2} may be computed from a computer model of a scene by setting the direction, orientation and viewport of the cameras C1 and C2 appropriately such that a stereo image pair suitable for viewing by the human visual system (HVS) is created.

In Fig. 4c, the creating of this 3D illusion is shown. The images F_{C1} and F_{C2} captured or computed by the cameras C1 and C2 are displayed to the eyes E1 and E2, using displays D1 and D2, respectively. The disparity between the images is processed by the human visual system so that an understanding of depth is created. That is, when the left eye sees the image S_{A2} of the sphere A2 on the left side of the image S_{A1} of sphere A1, and respectively the right eye sees the image S_{A2} of the sphere A2 on the right side, the human visual system creates an understanding that there is a sphere V2 behind the sphere V1 in a three-dimensional world. Here, it needs to be understood that the images F_{C1} and F_{C2} can also be synthetic, that is, created by a computer. If they carry the disparity information, synthetic images will also be seen as three-dimensional by the human visual system. That is, a pair of computer-generated images can be formed so that they can be used as a stereo image.

Fig. 4d illustrates how the principle of displaying stereo images to the eyes can be used to create 3D movies or virtual reality scenes having an illusion of being three-dimensional. The images F_{X1} and F_{X2} are either captured with a stereo camera or computed from a model so that the images have the appropriate disparity. By displaying a large number (e.g. 30) frames per second to both eyes using display D1 and D2 so that the images between the left and the right eye have disparity, the human visual system will create a cognition of a moving, three-dimensional image.

The field of view represented by the content may be greater than the displayed field of view e.g. in an arrangement depicted in Fig. 4d. Consequently, only a part of the content along the direction of view (a.k.a. viewing orientation) is displayed at a single time. This direction of view, that is, the head orientation, may be determined as a real orientation of the head e.g. by an orientation detector mounted on the head, or as a virtual orientation determined by a control device such as a joystick or mouse that can be used to manipulate the direction of view without the user actually moving his head. That is, the term "head orientation" may be used to refer to the actual, physical orientation of the user's head and changes in the same, or it may be used to refer to the virtual direction of the user's view that is determined by a computer program or a computer input device.

The content may enable viewing from several viewing positions within the 3D space. The texture picture(s), the geometry picture(s) and the geometry information may be used to synthesize the images F_{X1} and/or F_{X2} as if the displayed content was captured by camera(s) located at the viewing position.

The principle illustrated in Figs. 4a-4d may be used to create three-dimensional images to a viewer from a three-dimensional scene model (volumetric video) after the scene model has been encoded at the sender and decoded and reconstructed at the receiver. Because volumetric video describes a 3D scene or object at different (successive) time instances, such data can be viewed from any viewpoint. Therefore, volumetric video is an important format for any augmented reality, virtual reality and mixed reality applications, especially for providing viewing capabilities having six degrees of freedom (so-called 6DOF viewing).

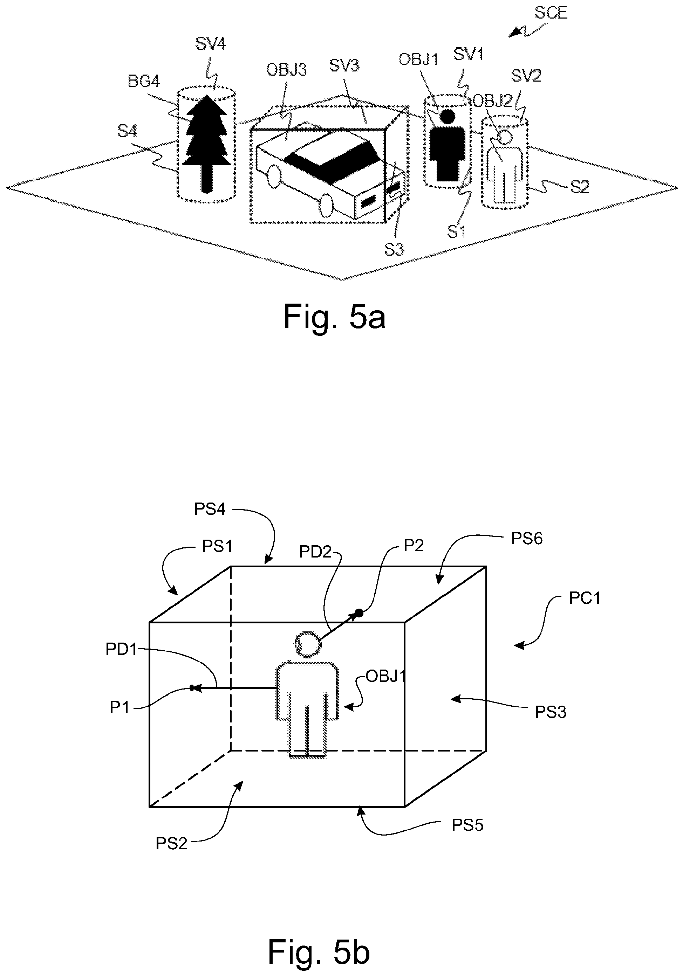

Fig. 5a illustrates projection of source volumes in a digital scene model SCE and parts of an object model OBJ1, OBJ2, OBJ3, BG4 to projection surfaces S1, S2, S3, S4, as well as determining depth information for the purpose of encoding volumetric video.

The projection of source volumes SV1, SV2, SV3, SV4 may result in texture pictures and geometry pictures, and there may be geometry information related to the projection source volumes and/or projection surfaces. Texture pictures, geometry pictures and projection geometry information may be encoded into a bitstream. A texture picture may comprise information on the colour data of the source of the projection. Through the projection, such colour data may result in pixel colour information in the texture picture. Pixels may be coded in groups, e.g. coding units of rectangular shape. The projection geometry information may comprise but is not limited to one or more of the following:
- projection type, such as planar projection or equirectangular projection
- projection surface type, such as a cube, sphere, cylinder, polyhedron
- location of the projection surface in 3D space
- orientation of the projection surface in 3D space
- size of the projection surface in 3D space
- type of a projection centre, such as a projection centre point, axis, or plane, from which a geometry primitive is projected onto the projection surface
- location and/or orientation of a projection centre.

The projection may take place by projecting the geometry primitives (points of a point could, triangles of a triangle mesh or voxels of a voxel array) of a source volume SV1, SV2, SV3, SV4 (or an object OBJ1, OBJ2, OBJ3, BG4) onto a projection surface S1, S2, S3, S4. The geometry primitives may comprise information on the texture, for example a colour value or values of a point, a triangle or a voxel. The projection surface may surround the source volume at least partially such that projection of the geometry primitives happens from the centre of the projection surface outwards to the surface. For example, a cylindrical surface has a projection centre axis and a spherical surface has a projection centre point. A cubical or rectangular surface may have projection centre planes or a projection centre axis or point and the projection of the geometry primitives may take place either orthogonally to the sides of the surface or from the projection centre axis or point outwards to the surface. The projection surfaces, e.g. cylindrical and rectangular, may be open from the top and the bottom such that when the surface is cut and rolled out on a two-dimensional plane, it forms a rectangular shape. Such rectangular shape with pixel data can be encoded and decoded with a video codec.

Alternatively or in addition, the projection surface such as a planar surface or a sphere may be inside group of geometry primitives, e.g. inside a point cloud that defines a surface. In the case of an inside projection surface, the projection may take place from outside in towards the centre and may result in sub-sampling of the texture data of the source.

In a point cloud based scene model or object model, points may be represented with any floating point coordinates. A quantized point cloud may be used to reduce the amount of data, whereby the coordinate values of the point cloud are represented e.g. with 10-bit, 12-bit or 16-bit integers. Integers may be used because hardware accelerators may be able to operate on integers more efficiently. The points in the point cloud may have associated colour, reflectance, opacity etc. texture values. The points in the point cloud may also have a size, or a size may be the same for all points. The size of the points may be understood as indicating how large an object the point appears to be in the model in the projection. The point cloud is projected by ray casting from the projection surface to find out the pixel values of the projection surface. In such a manner, the topmost point remains visible in the projection, while points closer to the centre of the projection surface may be occluded. In other words, in general, the original point cloud, meshes, voxels, or any other model is projected outwards to a simple geometrical shape, this simple geometrical shape being the projection surface.

As for the point cloud compression (PCC), for example the principles of the MPEG-I PCC may be used. MPEG-I PCC is standardization activity of Moving Picture Experts Group to develop standardized 3D point cloud compression (PCC). The aim is to support efficient and interoperable storage and exchange of 3D point clouds with the specified requirements for lossless and/or lossy coding of geometry coordinates, lossless and/or lossy coding of point cloud attributes data and support for time varying point clouds.

Different projection surfaces may have different characteristics in terms of projection and reconstruction. In the sense of computational complexity, a projection to a cubical surface may be the most efficient, and a cylindrical projection surface may provide accurate results efficiently. Also cones, polyhedron-based parallelepipeds (hexagonal or octagonal, for example) and spheres or a simple plane may be used as projection surfaces.

The phrase along the bitstream (e.g. indicating along the bitstream) may be defined to refer to out-of-band transmission, signalling, or storage in a manner that the out-of-band data is associated with the bitstream. The phrase decoding along the bitstream or alike may refer to decoding the referred out-of-band data (which may be obtained from out-of-band transmission, signalling, or storage) that is associated with the bitstream. For example, an indication along the bitstream may refer to metadata in a container file that encapsulates the bitstream.

As illustrated in Fig. 5a, a first texture picture may be encoded into a bitstream, and the first texture picture may comprise a first projection of texture data of a first source volume SV1 of a scene model SCE onto a first projection surface S1. The scene model SCE may comprise a number of further source volumes SV2, SV3, SV4.

In the projection, data on the position of the originating geometry primitive may also be determined, and based on this determination, a geometry picture may be formed. This may happen for example so that depth data is determined for each or some of the texture pixels of the texture picture. Depth data is formed such that the distance from the originating geometry primitive such as a point to the projection surface is determined for the pixels. Such depth data may be represented as a depth picture, and similarly to the texture picture, such geometry picture (in this example, depth picture) may be encoded and decoded with a video codec. This first geometry picture may be seen to represent a mapping of the first projection surface to the first source volume, and the decoder may use this information to determine the location of geometry primitives in the model to be reconstructed. In order to determine the position of the first source volume and/or the first projection surface and/or the first projection in the scene model, there may be first geometry information encoded into or along the bitstream.

A picture may be defined to be either a frame or a field. A frame may be defined to comprise a matrix of luma samples and possibly the corresponding chroma samples. A field may be defined to be a set of alternate sample rows of a frame. Fields may be used as encoder input for example when the source signal is interlaced. Chroma sample arrays may be absent (and hence monochrome sampling may be in use) or may be subsampled when compared to luma sample arrays. Some chroma formats may be summarized as follows:
- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate colour planes are in use, each of the two chroma arrays has the same height and width as the luma array.

It is possible to code sample arrays as separate colour planes into the bitstream and respectively decode separately coded colour planes from the bitstream. When separate colour planes are in use, each one of them is separately processed (by the encoder and/or the decoder) as a picture with monochrome sampling.

An attribute picture may be defined as a picture that comprises additional information related to an associated texture picture. An attribute picture may for example comprise surface normal, opacity, or reflectance information for a texture picture. A geometry picture may be regarded as one type of an attribute picture, although a geometry picture may be treated as its own picture type, separate from an attribute picture.

Texture picture(s) and the respective geometry picture(s), if any, and the respective attribute picture(s) may have the same or different chroma format.

Terms texture image and texture picture may be used interchangeably. Terms geometry image and geometry picture may be used interchangeably. A specific type of a geometry image is a depth image. Embodiments described in relation to a geometry image equally apply to a depth image, and embodiments described in relation to a depth image equally apply to a geometry image. Terms attribute image and attribute picture may be used interchangeably. A geometry picture and/or an attribute picture may be treated as an auxiliary picture in video/image encoding and/or decoding.

Depending on the context, a pixel may be defined to a be a sample of one of the sample arrays of the picture or may be defined to comprise the collocated samples of all the sample arrays of the picture.

Multiple source volumes (objects) may be encoded as texture pictures, geometry pictures and projection geometry information into the bitstream in a similar manner. That is, as in Fig. 5a, the scene model SCE may comprise multiple objects OBJ1, OBJ2, OBJ3, OBJ4, and these may be treated as source volumes SV1, SV2, SV3, SV4 and each object may be coded as a texture picture, geometry picture and projection geometry information.

In the above, the first texture picture of the first source volume SV1 and further texture pictures of the other source volumes SV2, SV3, SV4 may represent the same time instance. That is, there may be a plurality of texture and geometry pictures and projection geometry information for one time instance, and the other time instances may be coded in a similar manner. Since the various source volumes are in this way producing sequences of texture pictures and sequences of geometry pictures, as well as sequences of projection geometry information, the inter-picture redundancy in the picture sequences can be used to encode the texture and geometry data for the source volumes efficiently, compared to the presently known ways of encoding volume data.

An object OBJ3 (source volume SV3) may be projected onto a projection surface S3 and encoded into the bitstream as a texture picture, geometry picture and projection geometry information as described above. Furthermore, such source volume may be indicated to be static by encoding information into said bitstream on said fourth projection geometry being static. A static source volume or object may be understood to be an object whose position with respect to the scene model remains the same over two or more or all time instances of the video sequence. For such static source volume, the geometry data (geometry pictures) may also stay the same, that is, the object's shape remains the same over two or more time instances. For such static source volume, some or all of the texture data (texture pictures) may stay the same over two or more time instances. By encoding information into the bitstream of the static nature of the source volume the encoding efficiency may further be improved, as the same information may not need to be coded multiple times. In this manner, the decoder will also be able to use the same reconstruction or partially same reconstruction of the source volume (object) over multiple time instances.

In an analogous manner, the different source volumes may be coded into the bitstream with different frame rates. For example, a slow-moving or relatively unchanging object (source volume) may be encoded with a first frame rate, and a fast-moving and/or changing object (source volume) may be coded with a second frame rate. The first frame rate may be slower than the second frame rate, for example one half or one quarter of the second frame rate, or even slower. For example, if the second frame rate is 30 frames per second, the second frame rate may be 15 frames per second, or 1 frame per second. The first and second object (source volumes) may be "sampled" in synchrony such that some frames of the faster frame rate coincide with frames of the slower frame rate.

There may be one or more coordinate systems in the scene model. The scene model may have a coordinate system and one or more of the objects (source volumes) in the scene model may have their local coordinate systems. The shape, size, location and orientation of one or more projection surfaces may be encoded into or along the bitstream with respect to the scene model coordinates. Alternatively or in addition, the encoding may be done with respect to coordinates of the scene model or said first source volume. The choice of coordinate systems may improve the coding efficiency.

Information on temporal changes in location, orientation and size of one or more said projection surfaces may be encoded into or along the bitstream. For example, if one or more of the objects (source volumes) being encoded is moving or rotating with respect to the scene model, the projection surface moves or rotates with the object to preserve the projection as similar as possible.

If the projection volumes are changing, for example splitting or bending into two parts, the projection surfaces may be sub-divided respectively. Therefore, information on subdivision of one or more of the source volumes and respective changes in one or more of the projection surfaces may be encoded into or along the bitstream.

The resulting bitstream may then be output to be stored or transmitted for later decoding and reconstruction of the scene model.

Decoding of the information from the bitstream may happen in analogous manner. A first texture picture may be decoded from a bitstream to obtain first decoded texture data, where the first texture picture comprises a first projection of texture data of a first source volume of the scene model to be reconstructed onto a first projection surface. The scene model may comprise a number of further source volumes. Then, a first geometry picture may be decoded from the bitstream to obtain first decoded scene model geometry data. The first geometry picture may represent a mapping of the first projection surface to the first source volume. First projection geometry information of the first projection may be decoded from the bitstream, the first projection geometry information comprising information of position of the first projection surface in the scene model. Using this information, a reconstructed scene model may be formed by projecting the first decoded texture data to a first destination volume using the first decoded scene model geometry data and said first projection geometry information to determine where the decoded texture information is to be placed in the scene model.

A 3D scene model may be classified into two parts: first all dynamic parts, and second all static parts. The dynamic part of the 3D scene model may further be sub-divided into separate parts, each representing objects (or parts of) an object in the scene model, that is, source volumes. The static parts of the scene model may include e.g. static room geometry (walls, ceiling, fixed furniture) and may be compressed either by known volumetric data compression solutions, or, similar to the dynamic part, sub-divided into individual objects for projection-based compression as described earlier, to be encoded into the bitstream.

In an example, some objects may be a chair (static), a television screen (static geometry, dynamic texture), a moving person (dynamic). For each object, a suitable projection geometry (surface) may be found, e.g. cube projection to represent the chair, another cube for the screen, a cylinder for the person's torso, a sphere for a detailed representation of the person's head, and so on. The 3D data of each object may then be projected onto the respective projection surface and 2D planes are derived by "unfolding" the projections from three dimensions to two dimensions (plane). The unfolded planes will have several channels, typically three for the colour representation of the texture, e.g. RGB, YUV, and one additional plane for the geometry (depth) of each projected point for later reconstruction.

Frame packing may be defined to comprise arranging more than one input picture, which may be referred to as (input) constituent frames, into an output picture. In general, frame packing is not limited to any particular type of constituent frames or the constituent frames need not have a particular relation with each other. In many cases, frame packing is used for arranging constituent frames of a stereoscopic video clip into a single picture sequence. The arranging may include placing the input pictures in spatially non-overlapping areas within the output picture. For example, in a side-by-side arrangement, two input pictures are placed within an output picture horizontally adjacently to each other. The arranging may also include partitioning of one or more input pictures into two or more constituent frame partitions and placing the constituent frame partitions in spatially non-overlapping areas within the output picture. The output picture or a sequence of frame-packed output pictures may be encoded into a bitstream e.g. by a video encoder. The bitstream may be decoded e.g. by a video decoder. The decoder or a post-processing operation after decoding may extract the decoded constituent frames from the decoded picture(s) e.g. for displaying.

A standard 2D video encoder may then receive the planes as inputs, either as individual layers per object, or as a frame-packed representation of all objects. The texture picture may thus comprise a plurality of projections of texture data from further source volumes and the geometry picture may represent a plurality of mappings of projection surfaces to the source volume.

For each object, additional information may be signalled to allow for reconstruction at the decoder side:
- in the case of a frame-packed representation: separation boundaries may be signalled to recreate the individual planes for each object,
- in the case of projection-based compression of static content: classification of each object as static/dynamic may be signalled,
- relevant data to create real-world geometry data from the decoded (quantised) geometry channel(s), e.g. quantisation method, depth ranges, bit depth, etc. may be signalled,
- initial state of each object: geometry shape, location, orientation, size may be signalled,
- temporal changes for each object, either as changes to the initial state on a per-picture level, or as a function of time may be signalled, and
- nature of any additional auxiliary data may be signalled.

The decoder may receive the static 3D scene model data together with the video bitstreams representing the dynamic parts of the scene model. Based on the signalled information on the projection geometries, each object may be reconstructed in 3D space and the decoded scene model is created by fusing all reconstructed parts (objects or source volumes) together.

Standard video encoding hardware may be utilized for real-time compression/decompression of the projection surfaces that have been unfolded onto planes.

Single projection surfaces might suffice for the projection of very simple objects. Complex objects or larger scenes may require several (different) projections. The relative geometry of the object/scene may remain constant over a volumetric video sequence, but the location and orientation of the projection surfaces in space can change (and can be possibly predicted in the encoding, wherein the difference from the prediction is encoded).

Depth may be coded "outside-in" (indicating the distance from the projection surface to the 3D point), or "inside-out" (indicating the distance from the 3D point to the projection surface). In inside-out coding, depth of each projected point may be positive (with positive distance PD1) or negative (with negative distance). Fig. 5b shows an example of projecting an object OBJ1 using a cube map projection format, wherein there are six projection surfaces PS1,...,PS6 of the projection cube PC1. In this example, the projection surfaces are one on the left side PS1, one in front PS2, one on the right side PS3, one in the back PS4, one in the bottom PS5, and one in the top PS6 of the cube PC1 in the setup of Figure 5b.

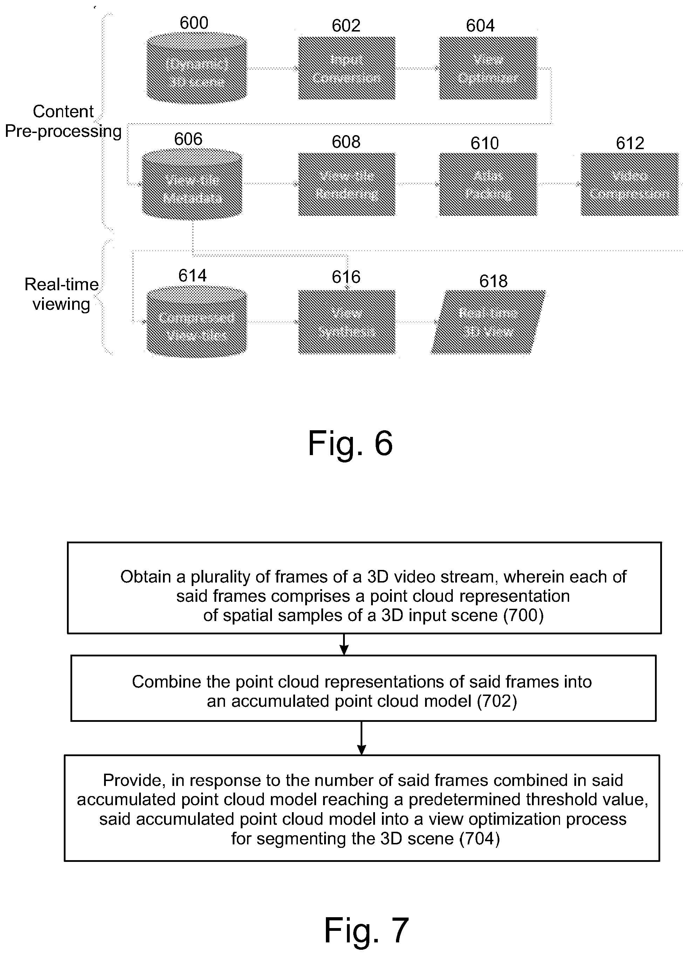

Figure 6 shows an example of a volumetric video compression pipeline and processing steps relating to real-time viewing of the 3D content. Herein, a dynamic 3D scene 600 is input to the content pre-processing pipeline. Fundamentally, in the content pre-processing pipeline each frame of the input 3D scene is processed separately.

In the Input Conversion unit 602 the input 3D scene is converted into a canonical representation for processing. As described above, each frame of the input is converted into a collection of 3D samples of the scene geometry, at a specified internal processing resolution. Depending on the input, this may involve e.g. voxelizing a mesh model, or down-sampling a more highly detailed point cloud into the processing resolution. The internal representation is then a point cloud representing the spatial 3D samples of the input scene.

The View Optimizer unit 604 takes the internal point cloud format and creates a segmentation of the scene optimized for the specified viewing conditions. This involves creating view-tiles that have sufficient coverage and resolution for representing the original input scene at minimal quality degradation within the given viewing constraints. The View Optimizer unit 604 makes use of the 3D position of the scene samples, but additional attributes such as surface normal, color, or material attributes may also be considered. Information describing the properties of the view-tiles is stored in a View-tile Metadata unit 606.

The resulting view-tiles are then pre-rendered in the View-tile Rendering unit 608. This may involve resampling an input point cloud into 2D tile projections, or calling an external path tracing renderer to render views of the original input scene.

The rendered tiles are fed to the Atlas Packer unit 610, which produces an optimal 2D layout of the rendered view-tiles and packs the pre-rendered tiles into video frames. The video frames are piped to Video Compression unit 612 for generating the final compressed data representation. It is noted all these stages handle the video data as per-frame basis.

The compressed view-tiles are stored as video bitstreams, represented by the Compressed View-tile unit 614. For viewing the tiles, the compressed video frame bitstreams and the view-tile metadata bitstreams are used in the View Synthesis unit 616 for creating novel views of the scene. The view-tile metadata contains the necessary information for the view synthesizer to employ rendering methods, such as point cloud rendering, mesh rendering, or ray-casting to reconstruct a view of the scene from any given 3D viewpoint (assuming the originally specified viewing constraints). Consequently, real-time 3D viewing 618 of the volumetric video can be achieved.

However, the above-described per-frame processing may cause problems relating to temporal coherency in volumetric video compression. As the segmentation of the 3D scene depends on the content of the scene, for dynamic content, the segmentation can change on a per-frame basis. Since video compression in turn relies on compressing temporal redundancy, a rapidly changing tile atlas is poorly suited for video compression.

In the following, an enhanced method for volumetric video compression will be described in more detail, in accordance with various embodiments.

A method, which is disclosed in Figure 7, comprises obtaining (700) a plurality of frames of a three-dimensional (3D) video stream, wherein each of said frames comprises a point cloud representation of spatial samples of a 3D input scene; combining (702) the point cloud representations of said frames into an accumulated point cloud model; and providing (704), in response to the number of said frames combined in said accumulated point cloud model reaching a predetermined threshold value, said accumulated point cloud model into a view optimization process for segmenting the 3D scene.

Thus, additional processing steps are provided in the underlying video codec to be carried out before the view segmentation process, wherein the processing steps provide temporal accumulation of scene geometry over a period of a predetermined number of volumetric frames. The temporally accumulated scene is input to the view segmentation process instead of the per-frame input of the original scene frames. This enables to handle any kind of dynamic scenes, not constrained to meshes, and to generate a static view layout optimized for the temporal flow of the scene in addition to the per-frame geometry. As a result, the amount of view metadata to be coded is significantly reduced, and the video compression efficiency is increased in terms of bitrate and reducing artefacts due to temporal incoherency.

According to an embodiment, the predetermined threshold value corresponds to a size of Group-of-Pictures (GoP). Group-of-Pictures (GoP) is a sub-sequence of an encoded video stream comprising a plurality of frames. GoP is recognized by most of the contemporary video coding standards and specific syntax elements are provided for utilising GoP in various processing steps of a video codec. Thus, the size of GoP, in terms of the number of frames, provides a good basis for the temporally accumulated point cloud model to be supplied in and processed by the view segmentation process.

According to an embodiment, the predetermined threshold value is 32. Assuming a GoP size is 32 frames, then the view segmentation process is only run for every 32 frames, in contrast to per-frame approach. This makes the view optimization process much faster in addition to producing temporal stability.

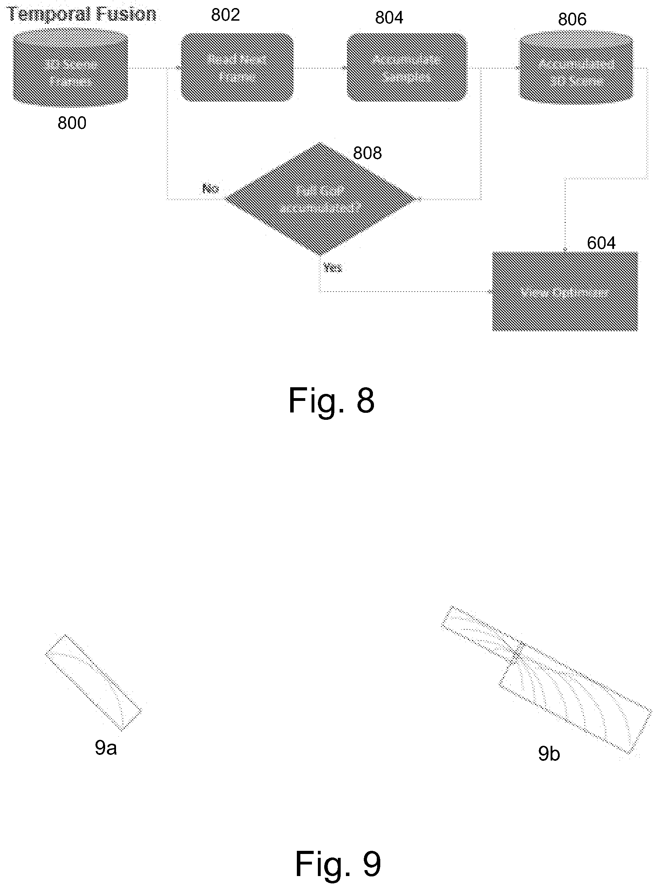

Figure 8 illustrates some processing steps, which may be carried out according to various embodiments. When considering the volumetric video compression pipeline shown in Figure 6, the processing steps of Figure 8 are carried out between the Input Conversion 602 and the View Optimizer 604 stages. The processing step illustrated in Figure 8 may be referred to as Temporal Fusion. This changes the processing so that a sub-sequence of multiple input frames, typically aligned with the video GoP length, is first read in and combined into a 4D representation of the sub-sequence.

As shown in Figure 8, the Input Conversion provides the frames 800 comprising the internal point cloud representations. In contrast to the basic pipeline of Figure 6, however, the internal point cloud is not fed into the View Optimizer 604 immediately. Instead, the frame is read 802 and its samples are added 804 to the accumulated internal point cloud model 806. Then, a subsequent frame is read and added to the accumulated internal point cloud model 806. After adding a frame, it is checked 808 whether the number of added frames has reached the predetermined threshold value, such as the GoP size. If not, the loop of reading and adding a new frame is continued until the predetermined threshold value has been reached. This triggers the accumulated internal point cloud model 806 to be fed into the View Optimizer 604.

According to an embodiment, the method further comprises checking, prior to combining any frame into said accumulated point cloud model, content of the frame; and ignoring frames providing no relevant data for the view optimization process. Thus, in order to save memory, it is checked whether similar samples already exist in the accumulated point cloud model, so that the new sample may only be added if it adds new data relevant for the View Optimizer.

Figure 9 shows an example of the effects of the temporally accumulated point cloud model on the view optimization process for a sub-region of a scene. Figure 9a shows a simplified view tile generated for a piece of content (the arc) from a single frame. Figure 9b shows the predetermined number of the accumulated frames of the moving content, and the resulting view tiles. In Figure 9b, only the content rendered inside each tile changes per frame. In practice, the Temporal Fusion, i.e. the accumulation process, adds multiple copies of all scene elements together, and the View Optimizer then produces a tiling of the scene that captures the joint scene samples efficiently.

According to an embodiment, the method further comprises creating metadata relating to the accumulated point cloud model, said metadata comprising position and size of each tile and view-projection parameters of each tile. Thus, for facilitating the decoding process, certain metadata is preferably coded into the video stream. The tile positions and sizes inside the video atlas, as well as the view-projection parameters associated with each tile, may be included. After temporal fusion, such data will be required only once per each unit of temporal fusion, typically one GoP.

An apparatus according to an aspect comprises at least one processor and at least one memory, said at least one memory stored with computer program code thereon, the at least one memory and the computer program code configured to, with the at least one processor, cause the apparatus at least to perform: obtaining a plurality of frames of a three-dimensional (3D) video stream, wherein each of said frames comprises a point cloud representation of spatial samples of a 3D input scene; combining the point cloud representations of said frames into an accumulated point cloud model; and providing, in response to the number of said frames combined in said accumulated point cloud model reaching a predetermined threshold value, said accumulated point cloud model into a view optimization process for segmenting the 3D scene.

In the above, where the example embodiments have been described with reference to an encoder or an encoding method, it needs to be understood that the resulting bitstream and the decoder or the decoding method may have corresponding elements in them. Likewise, where the example embodiments have been described with reference to a decoder, it needs to be understood that the encoder may have structure and/or computer program for generating the bitstream to be decoded by the decoder.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims.

## Claims

1. A method comprising:
obtaining a plurality of frames of a three-dimensional (3D) video stream, wherein each of said frames comprises a point cloud representation of spatial samples of a 3D input scene;
combining the point cloud representations of said frames into an accumulated point cloud model;
providing, in response to the number of said frames combined in said accumulated point cloud model reaching a predetermined threshold value, said accumulated point cloud model into a segmentation process for segmenting the 3D scene, said segmenting comprising creating view-tiles having a coverage and a resolution suitable for representing the 3D input scene at minimal quality degradation; and
creating metadata relating to the accumulated point cloud model, said metadata comprising a position and a size of each view-tile and view-projection parameters of each view-tile.

2. The method according to claim 1, wherein the predetermined threshold value corresponds to a size of Group-of-Pictures (GoP).

3. The method according to any preceding claim, further comprising
checking, prior to combining any frame into said accumulated point cloud model, content of the frame; and
ignoring frames redundant for the segmentation process.

4. An apparatus comprising:
means for obtaining a plurality of frames of a three-dimensional (3D) video stream, wherein each of said frames comprises a point cloud representation of spatial samples of a 3D input scene;
means for combining the point cloud representations of said frames into an accumulated point cloud model;
means for providing, responsive to the number of said frames combined in said accumulated point cloud model reaching a predetermined threshold value, said accumulated point cloud model into a segmentation process for segmenting the 3D scene, said segmenting comprising creating view-tiles having a coverage and a resolution suitable for representing the 3D input scene at minimal quality degradation; and
means for creating metadata relating to the accumulated point cloud model, said metadata comprising a position and a size of each view-tile and view-projection parameters of each view-tile.

5. The apparatus according to claim 4, wherein the predetermined threshold value corresponds to a size of Group-of-Pictures (GoP).

6. The apparatus according to any of claims 4 to 5, further comprising means for:
checking, prior to combining any frame into said accumulated point cloud model, content of the frame; and
ignoring frames redundant for the segmentation process.

## Patentansprüche

1. Verfahren, das Folgendes umfasst:
Erhalten einer Vielzahl von Frames eines dreidimensionalen (3D) Videostreams, wobei jeder der Frames eine Punktwolkenrepräsentation von räumlichen Proben einer 3D-Eingangsszene umfasst;
Kombinieren der Punktwolkenrepräsentationen der Frames zu einem akkumulierten Punktwolkenmodell;
in Reaktion darauf, dass die Anzahl der Frames, die zum akkumulierten Punktwolkenmodell kombiniert sind, einen vorbestimmten Schwellwert erreicht hat, Bereitstellen des akkumulierten Punktwolkenmodells in einem Segmentierungsprozess zum Segmentieren der 3D-Szene, wobei das Segmentieren das Erstellen von Ansichtskacheln umfasst, die eine Abdeckung und eine Auflösung aufweisen, die zum Repräsentieren der 3D-Eingangsszene bei minimaler Qualitätsminderung geeignet sind; und
Erstellen von Metadaten, die sich auf das akkumulierte Punktwolkenmodell beziehen, wobei die Metadaten eine Position und eine Größe von jeder Ansichtskachel und Ansichtsprojizierungsparameter von jeder Ansichtskachel umfassen.

2. Verfahren nach Anspruch 1, wobei der vorbestimmte Schwellwert einer Größe einer Gruppe von Bildern (GoP) entspricht.

3. Verfahren nach einem der vorhergehenden Ansprüche, das ferner Folgendes umfasst
Prüfen eines Inhalts des Frames, bevor Frames zum akkumulierten Punktwolkenmodell kombiniert werden; und
Ignorieren von Frames, die für den Segmentierungsprozess redundant sind.

4. Vorrichtung, die Folgendes umfasst:
Mittel zum Erhalten einer Vielzahl von Frames eines dreidimensionalen (3D) Videostreams, wobei jeder der Frames eine Punktwolkenrepräsentation von räumlichen Proben einer 3D-Eingangsszene umfasst;
Mittel zum Kombinieren der Punktwolkenrepräsentationen der Frames zu einem akkumulierten Punktwolkenmodell;
in Reaktion darauf, dass die Anzahl der Frames, die zum akkumulierten Punktwolkenmodell kombiniert sind, einen vorbestimmten Schwellwert erreicht hat, Mittel zum Bereitstellen des akkumulierten Punktwolkenmodells in einem Segmentierungsprozess zum Segmentieren der 3D-Szene, wobei das Segmentieren das Erstellen von Ansichtskacheln umfasst, die eine Abdeckung und eine Auflösung aufweisen, die zum Repräsentieren der 3D-Eingangsszene bei minimaler Qualitätsminderung geeignet sind; und
Mittel zum Erstellen von Metadaten, die sich auf das akkumulierte Punktwolkenmodell beziehen, wobei die Metadaten eine Position und eine Größe von jeder Ansichtskachel und Ansichtsprojizierungsparameter von jeder Ansichtskachel umfassen.

5. Vorrichtung nach Anspruch 4, wobei der vorbestimmte Schwellwert einer Größe einer Gruppe von Bildern (GoP) entspricht.

6. Vorrichtung nach einem der Ansprüche 4 bis 5, die ferner Mittel für Folgendes umfasst:
Prüfen eines Inhalts des Frames, bevor Frames zum akkumulierten Punktwolkenmodell kombiniert werden; und
Ignorieren von Frames, die für den Segmentierungsprozess redundant sind.

## Revendications

1. Procédé comprenant les étapes suivantes :
obtenir une pluralité de trames d'un flux vidéo tridimensionnel (3D), dans lequel chacune desdites trames comprend une représentation en nuage de points d'échantillons spatiaux d'une scène d'entrée 3D ;
combiner les représentations en nuage de points desdites trames en un modèle de nuage de points accumulés ;
en réponse au fait que le nombre desdites trames combinées dans ledit modèle de nuage de points accumulés a atteint une valeur seuil prédéterminée, fournir ledit modèle de nuage de points accumulés dans un processus de segmentation pour segmenter la scène 3D, ladite segmentation comprenant la création de tuiles de visualisation ayant une couverture et une résolution adaptées pour représenter la scène 3D d'entrée avec une dégradation minimale de la qualité ; et
créer des métadonnées relatives au modèle de nuage de points accumulés, lesdites métadonnées comprenant une position et une taille de chaque tuile de visualisation et des paramètres de projection de vue de chaque tuile de visualisation.

2. Procédé selon la revendication 1, dans lequel la valeur seuil prédéterminée correspond à une taille de groupes de photos (GoP).

3. Procédé selon l'une des revendications précédentes, comprenant en outre les étapes suivantes
vérifier le contenu de la trame avant de combiner toute trame dans ledit modèle de nuage de points accumulés ; et
ignorer les trames redondantes pour le processus de segmentation.

4. Appareil comprenant :
des moyens pour obtenir une pluralité de trames d'un flux vidéo tridimensionnel (3D), dans lequel chacune desdites trames comprend une représentation en nuage de points d'échantillons spatiaux d'une scène d'entrée 3D ;
des moyens pour combiner les représentations en nuage de points desdites trames en un modèle de nuage de points accumulés ;
en réponse au fait que le nombre desdites trames combinées dans ledit modèle de nuage de points accumulés a atteint une valeur seuil prédéterminée, des moyens pour fournir ledit modèle de nuage de points accumulés dans un processus de segmentation pour segmenter la scène 3D, ladite segmentation comprenant la création de tuiles de visualisation ayant une couverture et une résolution adaptées pour représenter la scène 3D d'entrée avec une dégradation minimale de la qualité ; et
des moyens pour créer des métadonnées relatives au modèle de nuage de points accumulés, lesdites métadonnées comprenant une position et une taille de chaque tuile de visualisation et des paramètres de projection de vue de chaque tuile de visualisation.

5. Appareil selon la revendication 4, dans lequel la valeur seuil prédéterminée correspond à une taille de groupes de photos (GoP).

6. Appareil selon l'une des revendications 4 à 5, comprenant en outre des moyens pour :
vérifier le contenu de la trame avant de combiner toute trame dans ledit modèle de nuage de points accumulés ; et
ignorer les trames redondantes pour le processus de segmentation.
